# EUROPÄISCHE PATENTSCHRIFT

(11) **EP 2 833 042 B1**
(45) Veröffentlichungstag und Bekanntmachung des Hinweises auf die Patenterteilung: **27.04.2016**
(21) Anmeldenummer: 14002533.9
(22) Anmeldetag: 22.07.2014
(51) Int. Cl.: F16K 41/10, F02M 63/00, F16K 31/00, F16K 1/14, F02C 7/232

(54) **Ventilanordnung zum Schalten und/oder Regeln eines Medienstroms eines Raumfahrttriebwerks und Raumfahrttriebwerk**
Valve assembly for switching and/or regulating a media flow of an aerospace engine and aerospace engine
Agencement de soupape destiné à commuter et/ou régler un flux de milieu d'un propulseur spatial et propulseur spatial

(30) Priorität: 29.07.2013 DE 102013012444
(43) Veröffentlichungstag der Anmeldung: 04.02.2015
(73) Patentinhaber: Airbus DS GmbH, 82024 Taufkirchen (DE)
(72) Erfinder: Kraus, Stephan, D-74229 Oedheim (DE); Maier, Thomas, D-74348 Lauffen (DE)

(56) Entgegenhaltungen:
- EP-A1- 2 003 329
- EP-A2- 1 167 748
- DE-A1- 10 260 349
- DE-A1- 10 342 772
- DE-A1- 19 946 833
- DE-A1- 19 958 705
- DE-A1-102004 044 811
- DE-A1-102005 046 778
- DE-A1-102008 001 142
- DE-A1-102009 002 311
- DE-A1-102009 044 295
- US-A- 4 669 660
- US-B2- 7 309 032

## Beschreibung

Die Erfindung betrifft eine Ventilanordnung zum Schalten und/oder Regeln eines Medienstroms eines Raumfahrttriebwerks gemäß dem Oberbegriff des Anspruches 1. Die Erfindung betrifft weiter ein Raumfahrttriebwerk.

Ventile werden allgemein zum Schalten oder Regeln des Durchflusses eines gasförmigen oder flüssigen Mediums verwendet. In Raumfahrttriebwerken werden üblicherweise Ventilanordnungen eingesetzt, welche Magnetventile umfassen. Bei diesen ist eine Trennung des zu regulierenden Mediums von einem Antrieb des Ventils einfach möglich, was für den Einsatz in Raumfahrttriebwerken aufgrund der Gefährlichkeit des Brennstoffes zwingend erforderlich ist. Allerdings lässt sich der Medienstrom nur schalten, da Magnetventile lediglich die Stellungen "offen" oder "geschlossen" aufweisen. Magnetventile müssen für eine Regelung getaktet betrieben werden, was in der Praxis nur schwer zu realisieren ist.

Die DE 10 2008 001 142 A1 offenbart ein Steuerventil mit einem Ventilglied, das durch einen piezoelektrischen Aktuator betätigt werden kann, und mit einem elastischen Rückstellelement sowie einem mechanischen Übersetzer. Der Übersetzer übersetzt eine Stellbewegung des Aktuators mittels einer beweglich gelagerten Membran und überträgt diese auf ein mit dem Ventilglied verbundenes Kolbenelement. Das Rückstellelement wirkt derart auf das Kolbenelement, dass es bei einer Rückstellbewegung des Aktuators eine Rückstellung des Kolbenelements und des Ventilglieds bewirkt. Der Aktuator weist einen Innenraum auf, innerhalb welchem das Rückstellelement zumindest teilweise angeordnet ist.

Es ist Aufgabe der vorliegenden Erfindung, eine Ventilanordnung anzugeben, welche baulich und/oder funktional verbessert ist, so dass Fehler im Hinblick auf Undichtigkeit oder hinsichtlich des Einbaus nach vermieden werden können, um eine hohe Zuverlässigkeit der Ventilanordnung bereitstellen zu können.

Es ist weiter Aufgabe der vorliegenden Erfindung ein Raumfahrttriebwerk anzugeben, bei dem die Brennstoffzufuhr besser regulierbar ist.

Diese Aufgabe wird gelöst durch eine Ventilanordnung gemäß den Merkmalen des Patentanspruches 1 sowie ein Raumfahrttriebwerk mit den Merkmalen des Patentanspruches 10. Vorteilhafte Ausgestaltungen ergeben sich aus den abhängigen Ansprüchen.

Es wird eine Ventilanordnung zum Schalten und/oder Regeln eines Medienstroms eines Raumfahrttriebwerks vorgeschlagen, die einen Antrieb, ein Ventil und ein flexibles Trennelement umfasst. Der Antrieb weist einen oder mehrere elektrisch ansteuerbare Aktuatoren auf, welche bei angelegter Steuerspannung ihre Länge in Richtung einer Längsachse der Ventilanordnung ändern. Der Antrieb ist somit ein elektrischer Antrieb. Das Ventil umfasst einen durch den Antrieb entlang der Längsachse hin- und her bewegbaren Ventilkolben mit einem Ventilglied. Das flexible Trennelement grenzt einen Arbeitsraum des Ventils von dem Antrieb ab, wodurch das durch das Ventil strömende oder in dem Arbeitsraum befindliche Medium von dem Antrieb hermetisch getrennt ist. Der Ventilkolben weist eine Kolbenplatte auf, die sich in einer Ebene senkrecht zur Längsachse der Ventilanordnung erstreckt. Die Kolbenplatte des Ventilkolbens ist in einem Gehäuserücksprung angeordnet, der sich in Richtung eines Antriebsgehäuses hinein erstreckt und der mit seinem offenen Ende mit einem Arbeitsraum verbunden ist, wobei sich die Kolbenplatte beim Öffnen des Ventils von dem Arbeitsraum weg in Richtung einer Rücksprungplatte des Gehäuserücksprungs bewegt.

Erfindungsgemäß ist das Trennelement mit dem antriebsseitigen Ende mit der Kolbenplatte verbunden. Hierdurch kann die fluiddichte Befestigung des Trennelements erleichtert werden. Ferner ist zwischen der Rücksprungplatte und der Kolbenplatte eine erste Feder angeordnet, die das Ventilglied gegen den Ventilsitz presst, wenn der oder die Aktuatoren nicht mit einer Spannung beaufschlagt sind.

Die Kolbenplatte dient dazu, der ersten Feder eine auf den Ventilkolben wirkende Angriffsfläche zu bieten, um sicherzustellen, dass, z.B. in einem nicht angesteuerten Zustand des oder der Aktuatoren, das Ventilglied an den Ventilsitz gepresst wird. Der oder die Aktuatoren stützen sich mit ihrem anderen Ende an einer mit einer zweiten Feder vorgespannten Kopfplatte ab, wobei die zweite Feder den oder die Aktuatoren mit einer Federvorspannung beaufschlagt. Die Kopfplatte wird, wenn sich die Aktuatoren bei einer Beaufschlagung mit Spannung ausdehnen, von dem Ventil weggedrückt. Über die Kopfplatte kann die Kraft auf den Ventilkolben übertragen werden. Dazu steht ein Ventilkolbenkopf in Eingriff mit der Kopfplatte, wobei der Ventilkoben durch eine Bohrung der Kopfplatte hindurch geführt ist und der Ventilkolbenkopf auf der dem oder den Aktuatoren gegenüberliegenden Seite mit dem Ventilkolben verbunden ist. Dies sorgt für eine Übertragung der Dehnung der Aktuatoren in die Bewegung des Ventilkolbens. Der Ventilkolbenkopf kann an dem, dem Ventilglied gegenüberliegenden Ende des Ventilkolbens angeordnet sein. Der Ventilkolbenkopf kann Kraft- und/oder formschlüssig mit dem Ventilkolben verbunden sein.

Die Kombination eines elektrischen Antriebs mit einem oder mehreren elektrisch ansteuerbaren Aktuatoren ermöglicht in Verbindung mit dem Trennelement eine Regelung auch bei strikter Trennung des zu regulierenden Mediums vom Antrieb der Ventilanordnung. Das Ventil ist durch den elektrischen Antrieb nicht nur in zwei Stellungen "offen" und "geschlossen" betreibbar. Vielmehr kann die Stellung des Ventilglieds zwischen diesen Endstellungen variabel verändert werden, wodurch der Medienstrom in einer gewünschten Weise einstellbar ist. Eine Beschädigung des Antriebs durch das Medium und ein unkontrolliertes Entweichen des Mediums aus dem Arbeitsraum kann hierdurch verhindert werden. Die Ventilanordnung ist damit für gefährliche Medien, wie z.B. Raketentreibstoffe, geeignet.

Das flexible Trennelement umgibt in einer Ausgestaltung den Ventilkolben und ist mit einem antriebsseitigen Ende mit dem Ventilkolben fluiddicht verbunden. Durch die Flexibilität des Trennelements wird eine Bewegung des Ventilkolbens zugelassen, wodurch das Ventil durch entsprechende Ansteuerung des Antriebs beliebig zwischen seinen Endstellungen "geschlossen" und "offen" verstellt werden kann. Gleichzeitig wird der Arbeitsraum von dem Antrieb getrennt.

Das Trennelement ist in einer weiteren Ausgestaltung mit dem ventilseitigen Ende mit einer Gehäusekomponente des Antriebs oder des Ventils verbunden. Zweckmäßigerweise entspricht der Durchmesser des Trennelements an seinem antriebsseitigen Ende dem Durchmesser an dem ventilseitigen Ende. Dadurch kann das Trennelement eine in etwa zylinderförmige Gestalt aufweisen, was dessen geometrische Gestalt vereinfacht.

Das Trennelement kann ein Metallfaltenbalg sein. Hierdurch wird eine gute Stabilität bei der geforderten Flexibilität sichergestellt. Das Trennelement kann auch eine Membran sein.

Die Kolbenplatte kann in einer Ausgestaltung sowohl zur Befestigung des Trennelements als auch als Angriffsfläche für die erste Feder dienen. In einer anderen Ausgestaltung kann die Kolbenplatte auch nur als Angriffsfläche für die erste Feder dienen. Das Trennelement ist in dieser Ausgesfaltung auf der der ersten Feder gegenüber liegenden Seite unmittelbar am Schaft des Ventilkolbens fluiddicht befestigt.

Der Hub des Ventilkolbens zwischen seinen Endstellungen "geschlossen" und "offen" kann besonders einfach, präzise und mit geringem Energieaufwand eingestellt werden, wenn der oder die Aktuatoren Piezoaktuatoren sind, welcher oder welche beim Anlegen einer Spannung ihre Länge ändern. Wird nur ein einziger Piezoaktor vorgesehen, so kann dieser als Ring ausgebildet sein. Umfasst der Antrieb mehrere Piezoaktuatoren, so können diese als Stapel ausgebildet sein. Die Piezoaktuatoren des Antriebs können in einer dem Fachmann bekannten Weise parallel oder in Serie oder in einer Kombination davon angeordnet sein. Die Aktuatoren sind insbesondere derart ausgebildet, dass diese sich dehnen, wenn diese mit einer Spannung beaufschlagt werden.

Der oder die Aktuatoren stützen sich in einer weiteren Ausgestaltung mit ihrem einen Ende an einer, an das Ventil angrenzenden Gehäusekomponente des Antriebs oder an einer Gehäusekomponente des Ventils ab. Dehnen sich die Aktuatoren bei einer Beaufschlagung mit Spannung aus, so erfolgt diese Ausdehnung in einer von dem Ventil abgewandten Richtung. Die Bewegung wird auf den Ventilkolben übertragen, so dass sich dann das Ventilglied von dem Ventilsitz weg bewegt und dadurch das Ventil öffnet.

Das Ventilglied kann z.B. eine Kugel sein. Das Ventilglied kann einen halbkugelförmigen Abschnitt aufweisen, der dem Ventilsitz zugewandt ist. Das Ventilglied kann ein Konus sein oder eine konusförmigen Abschnitt aufweisen, der dem Ventilsitz mit seinem eng zulaufenden Ende zugewandt ist.

Die Ventilanordnung kann eine Vorrichtung zur Bestimmung einer axialen Verschiebung des Ventilkolbens umfassen, wobei ein durch die Vorrichtung bestimmbarer Hub zur Steuerung des oder der Aktuatoren bereitstellbar ist. Hierdurch kann der Hub des Ventilkolbens gemessen werden. Über eine Rückkopplung kann dann die Steuerung der Spannungsquelle zur Ansteuerung des oder der Aktuatoren erfolgen und die Länge bzw. Größe des Öffnungsspalts des Ventils eingestellt werden. Dadurch ist es möglich, das Ventil nicht nur zwischen "offen" (d.h. maximaler Öffnungsspalt) und "geschlossen" zu schalten, sondern den Öffnungsspalt beliebig zwischen genannten Endstellungen einzustellen. Dies ermöglicht die Regelung des Medienstroms.

Der oder die Aktuatoren können in einer Ausgestaltung derart angeordnet sein, dass dieser oder diese beim Anlegen einer Spannung an den oder die Aktuatoren durch eine Verlängerung ein Öffnen des Ventils bewirkt und bei nicht angelegter Spannung das Ventil verschließt.

Die Erfindung schlägt ferner ein Raumfahrttriebwerk vor, das zumindest eine Ventilanordnung der oben beschrieben Art umfasst. Bei einem solchen Raumfahrttriebwerk kann die Brennstoffzufuhr auf einfache Weise zuverlässig und präzise reguliert werden. Im Übrigen weist das Raumfahrttriebwerk die oben beschriebenen Vorteile auf. Weiterer Vorteil eines derartig angesteuerten Triebwerks ist die freie Einstellbarkeit von Mischungsverhältnis und Schub, so dass unter anderem auf Trimmblenden verzichtet werden kann.

Die Erfindung wird nachfolgen näher anhand eines Ausführungsbeispiels erläutert.

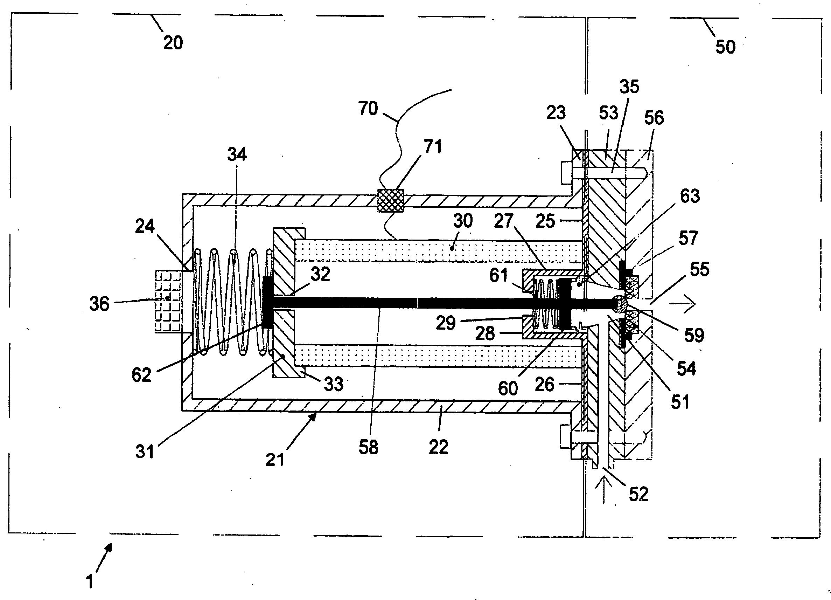

Fig. 1 zeigt eine schematische Darstellung einer erfindungsgemäßen Ventilanordnung, wie diese in einem Raumfahrttriebwerk zum Einsatz kommen kann.

Die Ventilanordnung 1 umfasst als Hauptbaugruppen einen Antrieb 20 und ein Ventil 50.

Der Antrieb 20 umfasst ein oder mehrere, elektrisch ansteuerbare Aktuatoren 30 in Gestalt von Piezoaktuatoren, welcher oder welche beim Anlegen einer Spannung sich in Richtung einer Längsachse der Ventilanordnung 1 dehnen. Die Längsachse erstreckt sich in Fig. 1 in der Zeichenebene von links nach rechts. Umfasst der Antrieb 20 nur einen einzigen Piezoaktuator 30, so ist dieser z.B. als Ring ausgebildet, der konzentrisch um die Längsachse der Ventilanordnung 1 verläuft. Umfasst der Antrieb 20 mehrere Piezoaktuatoren 30, so können diese als einzelne Stapel ausgebildet sein, welche kreisförmig um die Längsachse herum angeordnet sind. Einzelne Elemente des oder der Piezoaktuatoren 30 des Antriebs 20 können parallel oder in Serie oder in einer Kombination davon angeordnet sein. Der Einfachheit der Beschreibung halber wird nachfolgend davon ausgegange, dass der Antrieb 20 des in Fig. 1 gezeigten Ausführungsbeispiel mehrere Piezoaktuatoren 30 umfasst.

Das Ventil 50 umfasst einen durch den Antrieb 20 entlang der Längsachse hin- und her bewegbaren Ventilkolben 58, der an einem dem Ventil 50 zugewandten Ende ein kugelförmiges Ventilglied 59 aufweist. Das andere Ende des Ventilkolbens 58 endet in einem Gehäuse des Antriebs 20 (nachfolgend als Antriebsgehäuse 21 bezeichnet). Das Ventil 50 umfasst einen Arbeitsraum 51, in den über eine Einlassöffnung 52 ein gasförmiges oder flüssiges Medium, beispielsweise Brennstoff, strömen kann. Über eine durch das Ventilglied 59 verschließbare Auslassöffnung 55 kann das Medium aus dem Ventil 50 entweichen. Die Strömungsrichtung bei geöffnetem Ventil 50 ist durch die Pfeile an der Einlassöffnung 52 und der Auslassöffnung 55 gekennzeichnet. Die Einlassöffnung 52 ist durch einen quer zu der Längsrichtung verlaufenden Kanal in einer Einlassplatte 53 gebildet. Die Auslassöffnung 55 ist durch einen in Längsrichtung verlaufenden Kanal in einer Auslassplatte 56 gebildet. In der Auslassplatte 56 ist ein Ventilsitz 54 mit einer zentralen Bohrung angeordnet. Im Bereich des Ventilsitzes 54 sind die Einlassplatte 53 und die Auslassplatte 56 über einen Dichtkörper 57 miteinander verbunden. Der Dichtkörper 57 umläuft die zentrale Bohrung des Ventilsitzes 54.

Der Arbeitsraum 51 mündet in einen Gehäuserücksprung 27 des Antriebsgehäuses 21. In dem Antriebsgehäuse 21 sind die Piezoaktuatoren 30 angeordnet. Das Antriebsgehäuse 21 umfasst ein erstes Gehäuseteil 22 und ein zweites Gehäuseteil 25. Das erste Gehäuseteil 22 umfasst einen Flansch 23, welcher mit einem Boden 26 des zweiten Gehäuseteils 25 z.B. über eine Schraubverbindung verbunden ist. Das zweite Gehäuseteil 25 umfasst den Gehäuserücksprung 27. Der Gehäuserücksprung 27 erstreckt sich in Richtung des Inneren des Antriebsgehäuses 21 hinein, wobei dieser zwischen den Piezoaktuatoren 30 zum Liegen kommt.

Der Gehäuserücksprung 27 weist eine in Bezug auf die Längsachse radial verlaufende Rücksprungplatte 28 auf, welche eine zentral angeordnete Ausnehmung 29 aufweist, durch die der Ventilkolben 58 hindurch tritt. Der Ventilkolben 58 weist eine Kolbenplatte 60 auf, die sich in einer Ebene senkrecht zur Längsachse der Ventilanordnung 1 erstreckt. Die Kolbenplatte 60 ist fest mit dem Ventilkolben 58 verbunden und bewegt sich zusammen mit diesem in einem durch den Gehäuserücksprung 27 definierten Volumen. Zwischen der Rücksprungplatte 28 und der Kolbenplatte 60 ist eine erste Feder 61 angeordnet, welche den Ventilkolben 58 mit einer Vorspannung beaufschlagt. Sind die Piezoaktuatoren 30 nicht angesteuert, wird das Ventilglied 59 durch die Federkraft der ersten Feder 61 an den Ventilsitz 54 gepresst. Dadurch ist das Ventil 50 im stromlosen Zustand geschlossen. Die Kolbenplatte 60 befindet sich dann an dem, dem Arbeitsraum 51 zugewandten Ende des von dem Gehäuserücksprung 27 definierten Volumens.

Durch Ansteuerung der Piezoaktuatoren 30 wird der Ventilkolben 58, sobald die Federkraft der ersten Feder 61 überwunden ist, in der Zeichnung nach links bewegt, wodurch das Ventilglied 59 von dem Ventilsitz 54 entfernt wird. Dies bedeutet, das Ventil 50 ist offen. Der sich ergebende Öffnungsspalt ist abhängig von der an die Piezoaktuatoren 30 angelegten Spannung.

Die Kraftübertragung von den bei Ansteuerung sich dehnenden Piezoaktuatoren 30 erfolgt über einen Ventilkolbenkopf 62 des Ventilkolbens 58, der hier als Platte ausgeführt ist. Die Piezoaktuatoren stützen sich am Boden 26 des zweiten Gehäuseteils 25 ab. Mit ihrem anderen Ende stehen die Piezoaktuatoren 30 mit einer Kopfplatte 31 in Kontakt. Der in dem Antriebsgehäuse 21 in Längsrichtung bewegliche Ventilkolbenkopf 62 ist über eine zweite Feder 34 vorgespannt. Die zweite Feder 34 erzeugt eine Kraft, die der Richtung der Dehnung der Piezoaktuatoren 30 entgegen gerichtet ist. Damit die Piezoaktuatoren 30 definiert an der Kopfplatte 31 anliegen, weist diese einen Rand 33 auf, welche die Piezoaktuatoren 30 umgreift. Die Kopfplatte 31 weist eine zentrale Ausnehmung (Bohrung) 32 auf, durch die der Ventilkolben 58 hindurch tritt. Der Ventilkolbenkopf 62 des Ventilkolbens 58 steht mit der von den Piezoaktuatoren 30 abgewandten Seite der Kopfplatte 31 in Kontakt.

Bei einer Ansteuerung der Piezoaktuatoren 30 wird der Ventilkolben 58 durch Längung (Dehnung) der Piezoaktuatoren 30 unter Überwindung der Federkraft der ersten Feder 61 in der Zeichnung nach links bewegt, wobei die Kopfplatte 31 entgegen der Federkraft der zweiten Feder 34 ebenfalls nach links bewegt wird. Durch die Kopplung der Kopfplatte 31 mit dem Ventilkolbenkopf 62 wird der Ventilkolben 58 nach links bewegt, wodurch dann das Ventilglied 59 von dem Ventilsitz 54 entfernt wird.

An der von dem Ventil 50 abgewandten Seite des Gehäuses ist eine optionale Vorrichtung 36 zur Bestimmung einer axialen Verschiebung des Ventilkolbens 58 angeordnet. Durch die Vorrichtung 36 ist der von dem Ventilkölben 58 zurückgelegte Hub bestimmbar. Dieser kann zur Steuerung der Piezoaktuatoren 30 verwendet werden. Die Vorrichtung 36 kann z.B. auf einem optischen Messprinzip basieren. Ebenso können andere Messprinzipien zum Einsatz kommen. Die Detektion kann durch eine Ausnehmung 24 des ersten Gehäuseteils 22 hindurch erfolgen.

Zur Ansteuerung der Piezoaktuatoren 30 ist eine Leitung 70 ins Innere des Antriebsgehäuses 21 geführt. Die Leitung 70 wird über einen Durchlass 71 ins Innere des ansonsten hermetisch verschlossenen Antriebsgehäuses 21 geführt.

Der Arbeitsraum 51 des Ventils 50 ist von dem Antrieb 20 durch ein Trennelement 63 abgegrenzt. Das Trennelement 63 umgibt den Ventilkolben 58 und ist antriebsseitig mit der Kolbenplatte 60 fluiddicht verbunden. "Fluiddicht" bedeutet, dass die Verbindungsstelle undurchlässig für das von dem Ventil geschaltete oder geregelte Medium ist. Ferner ist das Trennelement 63 ventilseitig mit der Einlassplatte 52 verbunden. Das Trennelement 63 ist allgemein derart beschaffen, dass das durch das Ventil 50 strömende oder in dem Arbeitsraum 51 befindliche Medium von dem Antrieb 20 hermetisch getrennt ist. Das Trennelement 63 ist z.B. ein zylinderförmiger Metallfaltenbalg oder eine Membran.

Das erste Gehäuseteil 22, das zweite Gehäuseteil 25, die Einlassplatte 53 und die Auslassplatte 56 sind im gezeigten Beispiel über eine Verschraubung miteinander verbunden. Die Schrauben sind mit 35 gekennzeichnet. Ebenso können die genannten Komponenten miteinander verschweißt sein.

Das Ventil 50 kann derart gestaltet sein, dass stromab vom Ventilsitz 54 keine weiteren Elemente angeordnet sind. Dadurch kann das Volumen stromabwärts sehr klein gehalten werden. Dies ist im Falle einer Verwendung in einem Raumfahrttriebwerk zur Regelung und zum Schalten der Treibstoffzufuhr von Vorteil.

Allgemein kann die Ventilanordnung in all solchen Umgebungen verwendet werden, bei denen Durchflüsse von Medien zu schalten oder zu regeln sind.

Die Ventilanordnung weist zusammenfassend folgende Vorteile auf:
Die Kombination eines elektrischen Antriebs mit einem oder mehreren elektrisch ansteuerbaren Aktuatoren ermöglicht in Verbindung mit dem Trennelement eine Regelung eines Mediums auch bei strikter Trennung des zu regulierenden Mediums vom Antrieb der Ventilanordnung.

Das Ventil ist durch den elektrischen Antrieb nicht nur in zwei Stellungen "offen" und "geschlossen" betreibbar. Vielmehr kann die Stellung des Ventilglieds zwischen diesen Endstellungen variabel verändert werden, wodurch der Medienstrom in einer gewünschten Weise einstellbar ist.

Eine Beschädigung des Antriebs durch das Medium und ein unkontrolliertes Entweichen des Mediums aus dem Arbeitsraum kann hierdurch verhindert werden.

### BEZUGSZEICHENLISTE

- 1: Ventilanordnung
- 20: Antrieb
- 21: Antriebsgehäuse
- 22: erstes Gehäuseteil
- 23: Flansch
- 24: Ausnehmung für Hubmessvorrichtung 36
- 25: zweites Gehäuseteil
- 26: Boden
- 27: Gehäuserücksprung
- 28: Rücksprungplatte
- 29: Ausnehmung (Bohrung) für Ventilkolben 58
- 30: Aktuator
- 31: Kopfplatte
- 32: Ausnehmung (Bohrung) für Ventilkolben 58
- 33: Rand der Kopfplatte
- 34: zweite Feder
- 35: Schraube
- 36: Hubmessvorrichtung
- 50: Ventil
- 51: Arbeitsraum
- 52: Einlassöffnung
- 53: Einlassplatte
- 54: Ventilsitz
- 55: Auslassöffnung
- 56: Auslassplatte
- 57: Dichtkörper
- 58: Ventilkolben
- 59: Ventilglied
- 60: Kolbenplatte
- 61: erste Feder
- 62: Ventilkolbenkopf
- 63: Trennelement
- 70: Leitung
- 71: Durchlass

## Patentansprüche

1. Ventilanordnung zum Schalten und/oder Regeln eines Medienstroms eines Raumfahrttriebwerks, umfassend
- einen Antrieb (20), der einen oder mehrere elektrisch ansteuerbare Aktuatoren (30) aufweist, welche bei angelegter Steuerspannung ihre Länge in Richtung einer Längsachse der Ventilanordnung (1) ändern;
- ein Ventil (50), das einen durch den Antrieb (20) entlang der Längsachse hin- und her bewegbaren Ventilkolben (58) mit einem Ventilglied (59) umfasst, wobei der Ventilkolben (58) eine Kolbenplatte (60) aufweist, die sich in einer Ebene senkrecht zur Längsachse der Ventilanordnung (1) erstreckt und die in einem Gehäuserücksprung (27) angeordnet ist, der sich in Richtung eines Antriebsgehäuses (21) hinein erstreckt und der mit seinem offenen Ende mit einem Arbeitsraum (51) verbunden ist, wobei sich die Kolbenplatte (60) beim Öffnen des Ventils (50) von dem Arbeitsraum (51) weg in Richtung einer Rücksprungplatte bewegt;;
- ein flexibles Trennelement (63), das einen Arbeitsraum (51) des Ventils (50) von dem Antrieb (20) abgrenzt, wodurch das durch das Ventil (50) strömende oder in dem Arbeitsraum (51) befindliche Medium von dem Antrieb (20) hermetisch getrennt ist;
**dadurch gekennzeichnet, dass**
- das Trennelement (63) mit dem antriebsseitigen Ende mit der Kolbenplatte (60) verbunden ist;
- zwischen der Rücksprungplatte und der Kolbenplatte (60) eine erste Feder (61) angeordnet ist, die das Ventilglied (59) gegen den Ventilsitz (54) presst, wenn der oder die Aktuatoren (30) nicht mit einer Spannung beaufschlagt sind;
- der oder die Aktuatoren (30) sich mit ihrem anderen Ende an einer mit einer zweiten Feder vorgespannten Kopfplatte (31) abstützen, wobei die zweite Feder (34) den oder die Aktuatoren (30) mit einer Federvorspannung beaufschlagt; und
- ein Ventilkolbenkopf (62) in Eingriff mit der Kopfplatte (31) steht, indem der Ventilkoben durch eine Bohrung (32) der Kopfplatte (31) hindurch geführt ist und der Ventilkolbenkopf (62) auf der dem oder den Aktuatoren (30) gegenüberliegenden Seite mit dem Ventilkolben (58) verbunden ist.

2. Ventilanordnung nach Anspruch 1, bei der das Trennelement (63) den Ventilkolben (58) umgibt und mit einem antriebsseitigen Ende mit dem Ventilkolben (58) fluiddicht verbunden ist.

3. Ventilanordnung nach einem der vorhergehenden Ansprüche, bei der das Trennelement (63) mit dem ventilseitigen Ende mit einer Gehäusekomponente des Antriebs (20) oder des Ventils (50) verbunden ist.

4. Ventilanordnung nach einem der vorhergehenden Ansprüche, bei der das Trennelement (63) ein Metallfaltenbalg oder eine Membran ist.

5. Ventilanordnung nach einem der vorhergehenden Ansprüche, bei der der oder die Aktuatoren (30) Piezoaktuatoren sind, welcher oder welche beim Anlegen einer Spannung ihre Länge ändern.

6. Ventilanordnung nach einem der vorhergehenden Ansprüche, bei der der oder die Aktuatoren (30) sich mit ihrem einen Ende an einer, an das Ventil (50) angrenzenden Gehäusekomponente des Antriebs (20) oder an einer Gehäusekomponente des Ventils (50) abstützen.

7. Ventilanordnung nach einem der vorhergehenden Ansprüche, bei der das Ventilglied (59) eine Kugel ist.

8. Ventilanordnung nach einem der vorhergehenden Ansprüche, bei der diese eine Vorrichtung zur Bestimmung einer axialen Verschiebung des Ventilkolbens (58) umfasst, wobei ein durch die Vorrichtung bestimmbarer Hub zur Steuerung des oder der Aktuatoren (30) bereitstellbar ist.

9. Ventilanordnung nach einem der vorhergehenden Ansprüche, bei der der oder die Aktuatoren (30) derart angeordnet sind, dass dieser oder diese beim Anlegen einer Spannung an den oder die Aktuatoren (30) durch eine Verlängerung ein Öffnen des Ventils (50) bewirkt und bei nicht angelegter Spannung das Ventil (50) verschließt.

10. Raumfahrttriebwerk, umfassend zumindest eine Ventilanordnung nach einem der vorhergehenden Ansprüche.

## Claims

1. Valve arrangement for switching and/or regulating a medium flow in an aerospace engine, comprising
- a drive (20) which has one or more electrically controllable actuators (30) which, when a control voltage is applied, change(s) its/their length in the direction of a longitudinal axis of the valve arrangement (1);
- a valve (50) which comprises a valve piston (58) which can be moved back and forth along the longitudinal axis by the drive (20) and which has a valve element (59), wherein the valve piston (58) has a piston plate (60) which extends in a plane perpendicular to the longitudinal axis of the valve arrangement (1) and which is arranged in a housing recess (27) which extends inward in the direction of a drive housing (21) and which is connected by way of its open end to a working chamber (51), wherein, duping the opening of the valve (50), the piston plate (60) moves away from the working chamber (51) in the direction of a recess plate;
- a flexible dividing element (63) which delimits a working chamber (51) of the valve (50) with respect to the drive (20), whereby the medium flowing through the valve (50) or situated in the working chamber (51) is hermetically separated from the drive (20);
**characterized in that**
- the dividing element (63) is connected by way of the drive-side end to the piston plate (60) ;
- a first spring (61) is arranged between the recess plate and the piston plate (60), which first spring presses the valve element (59) against the valve seat (54) when a voltage is not applied to the one or more actuators (30);
- the one or more actuators (30) is/are supported by way of its/their other end on a head plate (31) which is preloaded by way of a second spring, wherein the second spring (34) exerts a spring preload on the one or more actuators (30); and
- a valve piston head (62) is in engagement with the head plate (31) by virtue of the valve piston being led through a bore (32) of the head plate (31) and the valve piston head (62) being connected, on the side situated opposite the one or more actuators (30), to the valve piston (58).

2. Valve arrangement according to Claim 1, in which the dividing element (63) surrounds the valve piston (58) and is connected in fluid-tight fashion by way of a drive-side end to the valve piston (58).

3. Valve arrangement according to one of the preceding claims, in which the dividing element (63) is connected by way of the valve-side end to a housing component of the drive (20) or of the valve (50).

4. Valve arrangement according to one of the preceding claims, in which the dividing element (63) is a metal corrugated bellows or a diaphragm.

5. Valve arrangement according to one of the preceding claims, in which the one or more actuators (30) is/are piezo actuators which change(s) its/their length when a voltage is applied.

6. Valve arrangement according to one of the preceding claims, in which the one or more actuators (30) is/are supported by way of one end thereof on a housing component, which adjoins the valve (50), of the drive (20) or on a housing component of the valve (50).

7. Valve arrangement according to one of the preceding claims, in which the valve element (59) is a ball.

8. Valve arrangement according to one of the preceding claims, in which said valve arrangement comprises a device for determining an axial displacement of the valve piston (58), wherein a stroke, which can be determined by way of the device, can be provided for controlling the one or more actuators (30).

9. Valve arrangement according to one of the preceding claims, in which the one or more actuators (30) is/are arranged such that, when a voltage is applied to the one or more actuators (30), it/they cause(s), by way of an increase in length, an opening of the valve (50), and the valve closes (50) when a voltage is not applied.

10. Aerospace engine comprising at least one valve arrangement according to one of the preceding claims.

## Revendications

1. Agencement de soupape destiné à commuter et/ou régler un flux de milieu d'un propulseur spatial, comprenant
- un entraînement (20), qui présente un ou plusieurs actionneur(s) actionnable(s) électriquement (30), dont la longueur dans la direction d'un axe longitudinal de l'agencement de soupape (1) change lors de l'application d'une tension de commande;
- une soupape (50), qui comprend un piston de soupape (58) avec un organe de soupape (59), déplaçable en mouvement alternatif le long de l'axe longitudinal au moyen de l'entraînement (20), dans lequel le piston de soupape (58) présente une plaque de piston (60), qui s'étend dans un plan perpendiculaire à l'axe longitudinal de l'agencement de soupape (1) et qui est disposée dans un retour de boîtier (27), qui s'étend vers l'intérieur en direction d'un boîtier d'entraînement (21) et qui est relié par son extrémité ouverte à une chambre de travail (51), dans lequel la plaque de piston (60) s'écarte de la chambre de travail (51) en direction d'une plaque de retour lors de l'ouverture de la soupape (50);
- un élément de séparation flexible (63), qui délimite une chambre de travail (51) de la soupape (50) par rapport à l'entraînement (20), le milieu s'écoulant à travers la soupape (50) ou se trouvant dans la chambre de travail (51) étant ainsi séparé hermétiquement de l'entraînement (20);
**caractérisé en ce que**
- l'élément de séparation (63) est relié par son extrémité côté entraînement à la plaque de piston (60);
- un premier ressort (61) est disposé entre la plaque de retour et la plaque de piston (60), et presse l'organe de soupape (59) contre le siège de soupape (54), lorsque le ou les actionneur(s) (30) n.'est/ ne sont pas soumis à une tension;
- le ou les actionneur(s) (30) prend/prennent appui par son/leur autre extrémité sur une plaque de tête (31) précontrainte avec un deuxième ressort, dans lequel le deuxième ressort (34) soumet le ou les actionneur(s) (30) à une précontrainte élastique; et
- une tête de piston de soupape (62) est en prise avec la plaque de tête (31), par le fait que le piston de soupape est guidé à travers un alésage (32) de la plaque de tête (31) et que la tête de piston de soupape (62) est reliée au piston de soupape (58) sur le côté situé à l'opposé du ou des actionneur(s) (30).

2. Agencement de soupape selon la revendication 1, dans lequel l'élément de séparation (63) entoure le piston de soupape (58) et est relié au piston de soupape (58) de façon étanche au fluide par une extrémité côté entraînement.

3. Agencement de soupape selon l'une quelconque des revendications précédentes, dans lequel l'élément de séparation (63) est relié par l'extrémité côté soupape à un composant de boîtier de l'entraînement (20) ou de la soupape (50).

4. Agencement de soupape selon l'une quelconque des revendications précédentes, dans lequel l'élément de séparation (63) est un soufflet métallique plissé ou une membrane.

5. Agencement de soupape selon l'une quelconque des revendications précédentes, dans lequel le ou les actionneur(s) (30) est/sont un/des actionneur(s) piézoélectrique(s), dont la longueur change lors de l'application d'une tension.

6. Agencement de soupape selon l'une quelconque des revendications précédentes, dans lequel le ou les actionneur(s) (30) prend/prennent appui par sa/leur première extrémité sur un composant de boîtier de l'entraînement (20) adjacent à la soupape (50) ou sur un composant de boîtier de la soupape (50).

7. Agencement de soupape selon l'une quelconque des revendications précédentes, dans lequel l'organe de soupape (59) est une bille.

8. Agencement de soupape selon l'une quelconque des revendications précédentes, dans lequel celui-cri comprend un dispositif pour la détermination d'un déplacement axial du piston de soupape (58), dans lequel une course déterminable par le dispositif peut être fournie pour la commande du ou des actionneur(s) (30).

9. Agencement de soupape selon l'une quelconque des revendications précédentes, dans lequel le ou les actionneur(s) (30) sont agencés de telle manière que celui-ci ou ceux-ci pravoque(nt) une ouverture de la soupape (50) par un allongement lors de l'application d'une tension audit ou auxdits actionneur(s) (30) et ferme(nt) la soupape (50) lorsqu'aucune tension n'est appliquée.

10. Propulseur spatial, comprenant au moins un agencement de soupape selon l'une quelconque des revendications précédentes.
